# EUROPEAN PATENT APPLICATION

(11) **EP 3 656 891 A1**
(43) Date of publication of application: **27.05.2020**
(21) Application number: 18835968.1
(22) Date of filing: 16.04.2018
(51) Int. Cl.: C23C 28/04, B32B 15/04, B32B 37/14, C23C 22/07, C23C 22/68, C23F 1/36

(54) **METHOD FOR TREATING SURFACE OF ALUMINUM ARTICLE**

(30) Priority: 19.07.2017 JP 2017139808
(71) Applicant: Showa Denko K.K., Tokyo 105-8518 (JP)
(72) Inventor: OTANI Kazuo, Isesaki-shi Gunma 372-0833 (JP); HIRANO Tomoya, Oyama-shi Tochigi 323-8678 (JP); NUMAO Shinji, Oyama-shi Tochigi 323-8678 (JP)
(74) Representative: Hoffmann Eitle
(86) International application number: PCT/JP2018/015731
(87) International publication number: WO 2019/017026

(57) **Abstract**

Provided is a method for treating a surface of an aluminum article capable of imparting an effective anchoring effect to a surface of the aluminum article and enabling a strong chemical bond between the surface of the aluminum article and an organic material layer such as a coated resin layer or a laminated FRP applied to the surface without using a chemical solution that is not easy to treat. In the method for treating a surface of an aluminum article according to the present invention, the surface of the aluminum article is subjected to at least one of an etching treatment, a boehmite treatment, and a zirconium treatment, and then further subjected to at least one of a silane coupling agent treatment, an isocyanate compound treatment, and a thiol compound treatment.

## Description

### Technical Field

The present invention related to a method for treating a surface of an aluminum article capable of imparting an effective anchoring effect to the surface of the aluminum article and enabling a strong chemical bond between the surface of the aluminum article and an organic material layer applied to the surface.

### Background Art

An aluminum-based material is lightweight and excellent in workability and thermal conductivity, and is widely used in each constituent element of, e.g., a heat exchanger. However, such an aluminum-based material cannot be used as it is for parts where corrosion resistance is required, and in general, an anodizing treatment (anodic oxidation treatment), a chemical conversion treatment, and a plating treatment are often applied to the surface of such an aluminum-based material. However, in cases where further corrosion resistance is required, it is desirable to apply a resin coating to the surface. When a resin coating is applied, an aluminum surface treatment technology is important in order to ensure strong adhesion between the resin and the aluminum. The above-mentioned anodizing treatment and chemical conversion treatment can also be used as a surface treatment technology for a resin coating on aluminum, but these treatments depend only on an anchoring effect, so it is not sufficient to obtain strong and stable adhesion.

Further, in automobile parts and OA equipment, to attain a weight reduction, a strong bond between metal such as aluminum and resin is required, and therefore a surface treatment technology for an aluminum article becomes important in these fields too.

Conventionally, a surface treatment of an aluminum article has generally been performed by a simple physical method, such as shot blasting, which is inferior in productivity and not suitable for articles having thin shapes or complicated shapes. Therefore, studies on chemical methods and the like in place of physical methods are proceeding. Specifically, a method has been performed in which a chemical conversion treatment by a chemical treatment (Patent Documents 1 and 2) or an anodizing treatment (Patent Document 3) is performed on a surface of an aluminum article to form fine irregularities on the surface, and then for example, injection molding of injecting a thermoplastic resin is performed to improve the adhesive property by the anchoring effect due to the minute uneven surfaces.

As a method for improving the adhesive property by providing fine irregularities on the surface as described above, a method in which the surface of an aluminum article is etched to form irregularities with a more complicated structure to thereby increase the anchoring effect and a method in which an uneven surface layer is formed by a thin film of an aluminum oxide or metal phosphorus oxide have been proposed (Patent Document 4). However, this method has a problem that it is not easy to treat a waste solution, such as a hydrazine solution, used in the etching process.

### Prior Art Document

### Patent Document

Patent Document 1: Japanese Unexamined Patent Application Publication No. 2012-41579
Patent Document 2: Japanese Unexamined Patent Application Publication No. 2016-16584
Patent Document 3: Japanese Patent No. 4,541,153
Patent Document 4: Japanese Unexamined Patent Application Publication No. 2010-131888

### SUMMARY OF THE INVENTION

### Problems to be Solved by the Invention

In view of the above-described problems, the present invention aims to provide a method for treating a surface of an aluminum article capable of imparting an effective anchoring effect to a surface of the aluminum article and enabling a strong chemical bond between the surface of the aluminum article and an organic material layer, such as a coated resin layer or a laminated fiber-reinforced plastic (FRP), applied to the surface without using a chemical solution whose waste solution treatment is not easily performed.

### Means for Solving the Problems

The present invention has been made to solve the aforementioned problems, and relates to a method for treating a surface of an aluminum article in which at least one of an etching treatment, a boehmite treatment, and a zirconium treatment is applied to the surface of the aluminum article to make the surface capable of imparting an effective anchoring effect and at least one of a silane coupling agent treatment, an isocyanate compound treatment, and a thiol compound treatment is applied to the surface so that the surface is formed into a surface enabling a chemical bond.

The present invention has the following aspects in order to achieve the above-described object.
[1] A method for treating a surface of an aluminum article, the method comprising:
   subjecting the surface of the aluminum article to at least one of an etching treatment, a boehmite treatment, and a zirconium treatment; and
   further subjecting the surface to at least one of a silane coupling agent treatment, an isocyanate compound treatment, and a thiol compound treatment.
[2] The method for treating a surface of an aluminum article,
   wherein the etching treatment as recited in the aforementioned Item [1] is performed by using at least one of a sodium hydroxide aqueous solution and a potassium hydroxide aqueous solution.
[3] The method for treating a surface of an aluminum article,
   wherein the zirconium treatment as recited in the aforementioned Item [1] is performed by using zirconium phosphate.
[4] The method for treating a surface of an aluminum article,
   wherein the silane coupling agent treatment as recited in the aforementioned Item [1] is performed by using a silane coupling agent having at least one selected from the group consisting of an amino group, an epoxy group, a (meth) acryloyl group, and a triazine thiol group.
[5] The method for treating a surface of an aluminum article,
   wherein the isocyanate compound treatment as recited in the aforementioned Item [1] is performed by using an isocyanate compound having a (meth) acryloyl group.
[6] The method for treating a surface of an aluminum article,
   wherein the thiol compound treatment as recited in the aforementioned Item [1] is performed by using at least one of a primary thiol compound and a secondary thiol compound.
[7] The method for treating a surface of an aluminum article, further comprising:
   subjecting the aluminum article subjected to a surface treatment by the method as recited in any one of the aforementioned Item [1] to [6] to a resin coating.
[8] The method for treating a surface of an aluminum article,
   wherein a resin used for the resin coating as recited in the aforementioned Item [7] is at least one selected from the group consisting of an epoxy resin, a phenolic resin, an unsaturated polyester resin, a vinyl ester resin, and a compound having an imide ring.
[9] The method for treating a surface of an aluminum article, further comprising:
   laminating a fiber-reinforced plastic (FRP) on the aluminum article subjected to a surface treatment by the method as recited in any one of the aforementioned Items [1] to [6].
[10] The method for treating a surface of an aluminum article as recited in any one of the aforementioned Items [1] to [9],
   wherein the aluminum article is a heat exchanger.
[11] The method for treating a surface of an aluminum article as recited in any one of the aforementioned Items [1] to [9],
   wherein the aluminum article is a pressure vessel liner.
[12] A surface-treated aluminum article, comprising:
   a surface-treated portion 2 formed on at least a part of a surface of an aluminum article 9; and
   a portion in which at least one compound selected from the group consisting of a silane coupling agent, an isocyanate compound, and a thiol compound is bonded to at least a part of a surface of the surface-treated portion and a functional group is provided.
[13] The surface-treated aluminum article as recited in the aforementioned Item [12],
   wherein the surface-treated portion 2 is an uneven surface formed on the surface of the aluminum article.
[14] The surface-treated aluminum article as recited in the aforementioned Item [12],
   wherein the surface-treated portion 2 is one of a boehmite film and a zirconium film.
[15] A composite material comprising:
   the surface-treated aluminum article as recited in any one of the aforementioned Items [12] to [14]; and
   an organic material layer 30 laminated on a surface 14 of the surface-treated aluminum article 1 on which the functional group is provided.
[16] The composite material as recited in the aforementioned Item [15],
   wherein the organic material layer 30 is a resin coating layer.
[17] The composite material as recited in aforementioned Item [15],
   wherein the organic material layer 30 is a fiber-reinforced plastic (FRP) layer.

### Effects of the Invention

The present invention is configured as described above. Therefore, without using a chemical solution whose waste solution treatment cannot be easily performed, an effective anchoring effect can be exerted on the surface of an aluminum article. Furthermore, it is possible for the surface of the aluminum article to make a strong chemical bond with an organic material layer, such as, e.g., a coated resin layer and a laminated fiber-reinforced plastic (FRP), formed on the surface of the aluminum article. Therefore, when the organic material layer is a coated resin layer, it is less likely to be peeled off, and when the organic material layer is a laminated FRP, strong adhesion can be realized. Thus, according to the method of the present invention, an aluminum article capable of firmly adhering an organic material layer to the surface can be provided.

### BRIEF DESCRIPTION OF THE DRAWINGS

FIG. 1 is a cross-sectional view schematically showing one embodiment of a surface-treated aluminum article obtained by the treatment method of the present invention.
FIG. 2 is a cross-sectional view showing an embodiment of a composite material obtained by joining a surface-treated aluminum article of FIG. 1 and an organic material to be joined.

### EMBODIMENTS FOR CARRYING OUT THE INVENTION

Hereinafter, the present invention will be described in more detail. In the present invention, the aluminum article is not particularly limited, and examples thereof include a heat exchanger. The heat exchanger is not particularly limited, and examples thereof can be exemplified by, for example, a radiator, a heater core, a condenser, an evaporator, an oil cooler, an intercooler, piping, a heat pipe, a boiler, an evaporator, an inverter cooler, a heat sink, a chiller, and a battery cooler.

First, a "primary treatment" in which at least one of an etching treatment, a boehmite treatment, and a zirconium treatment is applied to a surface of an aluminum article to exert an effective anchoring effect will be described.

### <Etching Treatment>

The etching used in the present invention may be any known etching. As a chemical etching method, an alkali etching method, a phosphate-sulfuric acid method, a fluoride method, a chromic acid-sulfuric acid method, and a salt iron method can be exemplified. As an electrical chemical etching method, an electrolytic etching method can be exemplified, but an alkali etching method using a sodium hydroxide aqueous solution and a potassium hydroxide is preferably used. In an alkali etching method, a chelating agent, an oxidizing agent, a phosphate, etc., can be used as an additive agent. However, basically, an aluminum article is immersed in 3% to 20% by weight of alkali hydroxide aqueous solution at 20 °C to 70 °C for about 1 minute to 15 minutes. Thereafter, it is immersed in 5% to 20% by weight of a nitric acid aqueous solution for several minutes to be neutralized and finally washed with water and dried to complete the treatment.

### < Boehmite Treatment>

The boehmite treatment used in the present invention may be a known one. This is a treatment in which an aluminum article is subjected to a hydrothermal treatment to change its surface to an aluminum hydroxide called boehmite (AlOOH). The crystal shape of this boehmite is a needle-shape, and the crystal grows and becomes complicated in shape as the processing time increases.

For the boehmite treatment, distilled water is used, and ammonia or triethanolamine is used as a reaction accelerator. For example, the treatment may be done by adding 0.3 wt% triethanolamine to distilled water, and immersing an aluminum article for 3 seconds to 5 minutes at 95 °C or higher.

The aluminum article to be subjected to the boehmite treatment may be an aluminum article not preliminary subjected to any treatment, but may also be an aluminum article preliminary subjected to a degreasing treatment or an etching treatment by the above-described alkali etching method.

### <Zirconium Treatment>

The zirconium treatment used in the present invention may be a known one. This is generally a method of generating a coating on a surface of an aluminum article using a zirconium phosphate or a zirconium salt. Specifically, the treatment is performed by immersing an aluminum article in a processing solution for 0.5 to 3 minutes at 45 °C to 70 °C using a chemical conversion treatment agent of "palcoat 3762" and "palcoat 3796" manufactured by Nihon Parkerizing Co., Ltd. In the case of performing a zirconium treatment, it is desirable to use an aluminum article pre-treated by the above-described alkali etching method.

Next, a "secondary treatment" will be described in which the surface of an aluminum article treated so as to exert an effective anchoring effect as described above is subjected to at least one of a silane coupling agent treatment, an isocyanate compound treatment, and a thiol compound treatment so that the surface of the aluminum article can be strongly chemically bonded with an organic material layer, such as, e.g., a coated resin layer and a laminated FRP.

### <Silane Coupling Agent Treatment>

The silane coupling agent that can be used in the present invention may be a known silane coupling agent used for, e.g., a surface treatment of glass fibers. When a low concentration aqueous solution or an organic solvent solution of a silane coupling agent is brought into contact with a surface of an aluminum article, an oligomer produced by the reaction of the hydroxyl group, etc., present on the surface of the aluminum article with the silanol group generated by the hydrolysis of the silane coupling agent or the condensation of the silanol groups adheres to the surface of the aluminum article to form a strong chemical bond by a drying treatment. In this way, on the surface of the aluminum article having an effective anchoring effect, a functional group capable of forming a chemical bond that enables strong adhesion between the organic material layer, such as a coated resin layer or a laminated FRP, and the aluminum article is also introduced.

Examples of the silane coupling agent to be used include: vinyltrimethoxysilane, vinyltriethoxysilane, 2-(3,4-epoxycyclohexyl) ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl) -3-aminopropylmethyldimethoxysilane, N-2-(aminoethyl) -3-aminopropyltrimethoxysilane, N-2-(aminoethyl) -3-aminopropyltrimethoxysilane, 3-aminopropyltrimethoxysilane, 3-aminopropyltriethoxysilane, 3-triethoxysilyl-N-(1,3-dimethyl-butylidene) propylamine, N-phenyl-3-aminopropyltrimethoxysilane, N-(vinylbenzyl) -2-aminopropyltrimethoxysilane hydrochloride, tris-(trimethoxysilylpropyl) isocyanurate, 3-ureidopropyltrialkoxysilane, 3-mercaptopropylmethyldimethoxysilane, 3-isocyanatopropyltriethoxysilane, and dithioltriazinepropyltriethoxysilane.

The method for treating the surface of the aluminum article using a silane coupling agent may be a known one. The silane coupling agent may be sprayed directly onto the surface of the aluminum article. It is preferable to adopt a method in which the aluminum article is immersed in a solution in which a silane coupling agent is diluted to several to several tens of percent (%) with a solvent at room temperature to about 100 °C for one minute to several days, and then the aluminum article is pulled up and dried at room temperature to about 100 °C for one minute to several hours.

### <Isocyanate Compound Treatment>

The isocyanate compound used in the present invention may be a known one. Preferable examples of theisocianate include: diphenylmethane diisocyanate (MDI), hexamethylene diisocyanate (HDI), tolylene diisocyanate (TDI), and isophorone diisocyanate (IPDI), which are polyfunctional isocyanates; and 2-isocyanatoethyl methacrylate (Karenz MOI (registered trademark) manufactured by Showa Denko K.K.), 2-isocyanatoethyl acrylate (Karenz AOI (registered trademark) manufactured by Showa Denko K.K.), 1,1-(bisacryloyloxyethyl) ethyl isocyanate (Karenz BEI (registered trademark) manufactured by Showa Denko K.K.), and 2-isocyanate ethyl acrylate (AOI-VM (registered trademark) manufactured by Showa Denko K.K.),which are isocyanate compounds each having a radical reactive group.

The method for treating a surface of an aluminum article using an isocyanate compound may be a known one. It is preferable to adopt a method in which an aluminum article is immersed in a solution in which an isocyanate compound is diluted to several to several tens of percent (%) with a solvent at room temperature to about 100 °C for one minute to several days, and the aluminum article is pulled up and dries at room temperature to about 100 °C for one minute to several hours.

### <Thiol Compound Treatment>

The thiol compound used in the present invention may be a thilol compound available as a commercial product. Examples of commercially available thiol compounds include: pentaerythritol tetrakis (3-mercaptopropionate) (trade name: QX40, manufactured by Mitsubishi Chemical Corporation); product name: QE-340M manufactured by Toray fine chemicals, Co., Ltd., ether-type primary thiol (trade name: Cup Cure 3-800, manufactured by Cognis Corporation); 1,4-bis (3-mercaptobutyryloxy) butane (trade name: Karenz MT (registered trademark) BD1, manufactured by Showa Denko K.K.); pentaerythritol tetrakis (3-mercaptobutyrate) (trade name: Karenz MT PE1, manufactured by Showa Denko K.K.), and 1,3,5-tris (3-mercaptobutyloxyethyl) -1,3,5-triazine-2,4,6 (1H, 3H, 5H)-trione (trade name: Karenz MT NR1, manufactured by Showa Denko K.K.). Among them, Karenz MT PE1 is excellent in stability in an epoxy resin.

The method for treating the surface of the aluminum article using a thiol compound may be a known one. It is preferable to adopt a method in which an aluminum article is immersed in a solution in which a thiol compound is diluted to several to several tens of percent (%) with a solvent at room temperature to about 100 °C for one minute to several days, and then the aluminum article is pulled up and dried at room temperature to about 100 °C for one minute to several hours. An amine may be added as a catalyst to the thiol compound diluted solution.

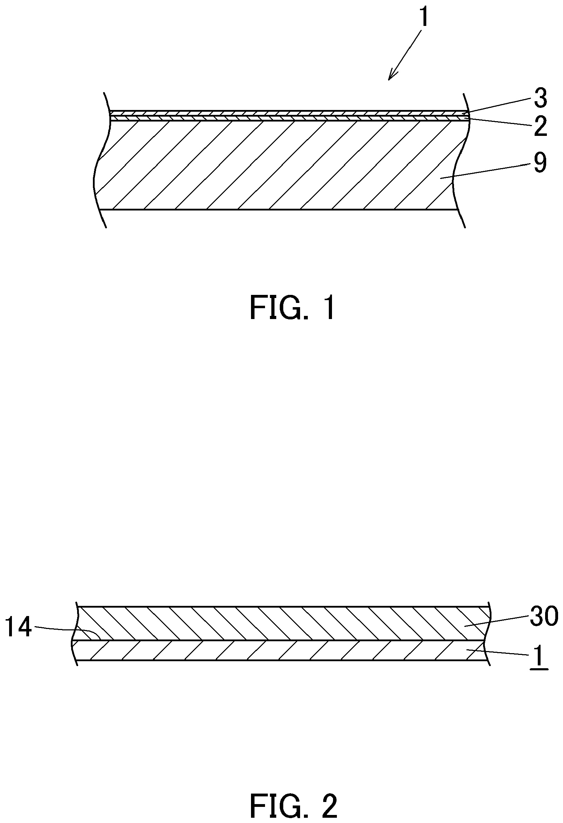

In the surface-treated aluminum article 1 obtained by the above surface treatment method, a surface-treated portion 2 is formed on at least a part of the surface of the aluminum article 9, and a portion 3 in which a functional group is provided by being bonded by at least one compound selected from the group consisting of a silane coupling agent, an isocyanate compound, and a thiol compound at at least a part of the surface of the surface-treated portion 2 is formed (see FIG. 1).

Next, a method for applying a resin coating to the surface of the aluminum article treated by the primary treatment and the secondary treatment will be described. The present invention enables strong adhesion between a coated resin layer and the aluminum article. The coating resin may be a known one. For example, the coating resin may be one or more one selected from an epoxy resin, a phenolic resin, an unsaturated polyester resin, a vinyl ester resin, and a compound having an imide ring, and may further include a resin other than the above.

### <Epoxy Resin>

The epoxy resin may be any epoxy resin produced by a known method, and is preferably a thermosetting epoxy resin having at least two epoxy groups in one component. As such an epoxy resin, for example, a known resin, such as, e.g., an ether type bisphenol type epoxy resin, a novolak type epoxy resin, a polyphenol type epoxy resin, an aliphatic type epoxy resin, an ester type aromatic epoxy resin, a cyclic aliphatic epoxy resin, an ether ▪ ester-type epoxy resin can be exemplified. The most preferable one is a bisphenol A type epoxy resin. The epoxy resin can be used alone or in combination of two or more resins. General-purpose products, such as, e.g., "epicoat 1001" and "epicoat 828" manufactured by Mitsubishi Chemical Corporation can be used.

### <Phenolic Resin>

A phenolic resin is a resin obtained by condensing and polymerizing an addition reaction product of phenol and aldehyde, and is not particularly limited, and those known in the art can be used. Examples of the phenolic resin include a resol type phenolic resin and a novolac type phenolic resin.

The resol type phenolic resin is not particularly limited, and those known in the technical field can be used. As the phenol used as a raw material for producing a resol type phenolic resin, phenol, various cresols, various ethylphenol, various xylenol, various butyl phenol, various octyl phenol, various nonylphenol, various phenylphenol, various cyclohexylphenol, catechol, resorcinol, hydroquinone, etc., can be used individually or in a mixture of two or more thereof. As examples of aldehydes, formaldehyde, acetaldehyde, paraformaldehyde, propyl aldehyde, butyraldehyde, valeraldehyde, hexylaldehyde, benzaldehyde, hydroxybenzaldehyde, dihydroxybenzaldehyde, hydroxymethylbenzaldehyde, glyoxal, crotonaldehyde, glutaraldehyde, and the like, can be exemplified. From the viewpoint of practicality, formaldehyde and paraformaldehyde are preferably used. A preferred resol type phenolic resin is a liquid resol type phenolic resin having a viscosity of 500 to 8,000 mPa·s (25 °C), a specific gravity of 1.15 to 1.30, a pH of 6.6 to 7.2, and a non-volatile content of 40% to 80%. Such a resol type phenolic resin is commercially available, and for example, commercially available products "BRL-240", "BRL-1017" and the like manufactured by Aika SDK Phenol Co., Ltd. can be used.

The novolac type phenolic resin is not particularly limited, and those resins known in the technical field can be used. As the phenol used as a raw material for producing the novolac type phenolic resin, phenol, various cresols, various ethylphenol, various xylenols, various butylphenol, various octylphenol, various nonylphenol, various phenylphenol, various cyclohexylphenol, catechol, resorcinol, hydroquinone, and the like, can be exemplified. These phenol can be used alone or in combination. As aldehydes, formaldehyde, acetaldehyde, paraformaldehyde, propylaldehyde, butyraldehyde, valeraldehyde, hexylaldehyde, benzaldehyde, hydroxybenzaldehyde, dihydroxybenzaldehyde, hydroxymethylbenzaldehyde, glyoxal, crotonaldehyde, glutaraldehyde, etc., can be used. In particular, a formaldehyde aqueous solution (formalin) is preferably used. These aldehydes can be used alone or in combination. As the examples of novolak catalysts, inorganic acids such as hydrochloric acid and sulfuric acid, and organic acids such as acetic acid and oxalic acid may be exemplified. These catalysts can be used alone or in combination. The number average molecular weight of the novolak type phenolic resin is preferably 300 to 1,000. Such a novolac type phenolic resin is commercially available, and for example, products "BRG-556", "BRG-557", and the like manufactured by Aika SDK Phenol Co., Ltd., can be used.

The mixing ratio of an epoxy resin and a phenolic resin is preferably epoxy equivalent / hydroxyl group equivalent = 0.6/1.4 to 1.4/0.6, more preferably epoxy equivalent / hydroxyl group equivalent = 0.8/1.2 to 1.2/0.8. If the mixing ratio is outside this range, the adhesive properties and water resistance of the coating may sometimes decrease.

For the purpose of imparting flexibility and water resistance of the coating film, all or a part of a phenolic resin may be replaced with a phenolic resin having an alkyl group and/or an allyl group. The phenolic resin having an alkyl group and/or allyl group is not particularly limited, and those known in the technical field can be used. The phenolic resin having an alkyl group is a phenolic resin produced using 4-tertiary butylphenol, 4-octylphenol or the like as a raw material, and for example, a product "CKM-1634" manufactured by Aika SDK Phenol Co., Ltd., can be used.

As the phenolic resin having an allyl group, an allylated phenolic resin obtained via allyl-etherification and Claisen rearrangement of a phenolic resin can be used. For example, those obtained via allyl etherification and Claisen rearrangement of "BRG series" manufactured by Aika SDK Phenol Co., Ltd., are effective.

The use of a phenolic resin having an alkyl group and/or an allyl group is useful for improving the flexibility and water resistance of the coating film, and is also effective in preventing adhesion of scale. The replacement ratio may be 100% of the phenolic resin, but is preferably 10% or more, more preferably 30% or more. If the amount used is less than 10%, the effects of improving the flexibility and water resistance of the coating film are less likely to be exerted.

### <Unsaturated Polyester Resin>

The unsaturated polyester resin is a resin obtained by dissolving a condensation product (unsaturated polyester) resulting from an esterification reaction of polyhydric alcohol and unsaturated polybasic acid (and saturated polybasic acid if necessary) in a polymerizable monomer, such as, e.g., styrene. Such an unsaturated polyester resin is described in "Polyester Resin Handbook" (Nikkan Kogyo Shimbun, Ltd., published in 1988) or "Paint Glossary" (edited by Color Material Association, published in 1993).

The polyhydric alcohol is not particularly limited, but ethylene glycol, propylene glycol, diethylene glycol, dipropylene glycol, 1,2-butanediol, 1,3-butanediol, 1,5-pentanediol, 1,6 -hexanediol, 2-methyl-1,3-propanediol, 2,2-dimethyl-1,3-propanediol, cyclohexane-1,4-dimethanol, ethylene oxide adduct of bisphenol A, and propylene oxide adduct of bisphenol A may be exemplified. These can be used alone or in combination of two or more thereof.

The unsaturated polybasic acid is not particularly limited, and examples thereof include fumaric acid, maleic anhydride, maleic acid, itaconic acid, and acid anhydrides thereof. These can be used alone or in combination of two or more thereof.

The saturated polybasic acid is not particularly limited, and examples thereof include phthalic anhydride, isophthalic acid, terephthalic acid, tetrahydrophthalic acid, adipic acid, sebacic acid, and acid anhydrides thereof. These can be used alone or in combination of two or more thereof.

The weight average molecular weight of the unsaturated polyester is not particularly limited, but is preferably 2,000 to 6,000, more preferably 3,000 to 5,000. When the weight average molecular weight of the unsaturated polyester is out of the above range, the balance of the amount of styrene in the resin may be lost and the strength may not sometimes be sufficient.

### <Vinyl Ester Resin>

The vinyl ester resin is a resin obtained by dissolving vinyl ester in a polymerizable monomer, such as, e.g., styrene. Such vinyl ester resin is also called an epoxy acrylate resin, and is described in "Polyester Resin Handbook" (Nikkan Kogyo Shimbun, Ltd., published in 1988) or "Paint Glossary" (edited by Color Material Association, published in 1993).

The vinyl ester is not particularly limited, and a known method can be used. As the example of the vinyl ester, a resin obtained by reacting an epoxy resin with an unsaturated monobasic acid (for example, acrylic acid or methacrylic acid), and a resin obtained by reacting saturated polybasic acid and/or unsaturated polybasic acid, saturated polyester or unsaturated polyester having terminal carboxyl group obtained from polyhydric alcohol, and an epoxy compound having α, β-unsaturated carboxylic acid ester group can be exemplified.

As the epoxy resin, bisphenol A type diglycidyl ether and high molecular weight homologue thereof, novolac polyglycidyl ether and its high molecular weight homologues, and aliphatic glycidyl ethers, such as 1,6-hexanediol diglycidyl ether, can be exemplified. More specifically, a reaction product of bisphenol A and epichlorohydrin, a reaction product of hydrogenated bisphenol A and epichlorohydrin, a reaction product of cyclohexanedimethanol and epichlorohydrin, a reaction product of norbornane dialcohol and epichlorohydrin, a reaction product of tetrabromobisphenol A and epichlorohydrin, a reaction product of tricyclodecane dimethanol and epichlorohydrin, alicyclic diepoxy carbonate, alicyclic diepoxy acetal, alicyclic diepoxycarboxylate, novolac glycidyl ether, and cresol novolac glycidyl ether can be exemplified. Among these, from the viewpoint of toughness, bisphenol A type diglycidyl ether, novolak type polyglycidyl ether, and brominated compounds thereof are preferred. These can be used alone or in combination of two or more thereof. From the viewpoint of imparting flexibility, saturated dibasic acids, such as, e.g., adipic acid, sebacic acid and dimer acid, may be reacted with an epoxy resin.

Examples of the saturated polybasic acid, the unsaturated polybasic acid, and the polyhydric alcohol maybe those described in the description of the <Unsaturated Polyester Resin>. Examples of the epoxy compound having the α, β-unsaturated carboxylic acid ester group include glycidyl methacrylate.

The weight average molecular weight of the vinyl ester is not particularly limited, but is preferably 1,000 to 6,000, more preferably 1,500 to 5,000. When the weight average molecular weight of the vinyl ester is out of the above range, the adhesive strength of the resin coating layer to the surface of the aluminum article may sometimes not be sufficient.

Examples of resins that can be used in the same manner as an unsaturated polyester resin and a vinyl ester resin include a urethane (meth) acrylate resin and a polyester (meth) acrylate resin.

The urethane (meth) acrylate resin is a radically polymerizable unsaturated group-containing oligomer that can be obtained, for example, by reacting a polyisocyanate with a polyhydroxy compound or a polyhydric alcohol, and further reacting with a hydroxyl group-containing (meth) acrylic compound and optionally a hydroxyl group-containing allyl ether compound. The urethane (meth) acrylate resin can also be obtained by reacting a hydroxyl group-containing (meth) acrylic compound with a polyhydroxy compound or polyhydric alcohol, and further reacting with polyisocyanate.

The polyester (meth) acrylate resin that can be used in the present invention is: (1) (meth) acrylate obtained by reacting an epoxy compound containing an α, β-unsaturated carboxylic acid ester group with a terminal carboxyl group polyester obtained from at least one of saturated polybasic acid and unsaturated polybasic acid and polyhydric alcohol, (2) (meth) acrylate obtained by reacting a hydroxyl group-containing acrylate with polyester of a terminal carboxyl group obtained from at least one of saturated polybasic acid and unsaturated polybasic acid and polyhydric alcohol, and (3) (meth) acrylate obtained by reacting (meth) acrylic acid with a terminal hydroxyl group polyester obtained from at least one of saturated polybasic acid and unsaturated polybasic acid and polyhydric alcohol.

### <Radically Polymerizable Unsaturated Monomer>

The radical polymerizable unsaturated monomer used for the production of a radical polymerizable resin, such as the above unsaturated polyester resin, vinyl ester resin, urethane (meth) acrylate resin, and polyester (meth) acrylate resin, includes: for example, a styrenic monomer, such as, e.g., a styrene monomer, α-, o-, m-, p-alkyl of styrene, nitro, cyano, and amide, an ester derivative, chlorostyrene, vinyltoluene, and divinylbenzene; dienes, such as, e.g., butadiene, 2, 3-dimethylbutadiene, isoprene, and chloroprene; a (meth) ethyl acrylate, such as, e.g., (meth) methyl acrylate, methyl (meth) acrylate, (meth) acrylic acid-n-propyl, (meth) acrylic acid-i-propyl, (meth) acrylic acid hexyl, (meth) acrylic acid 2-ethylhexyl, lauryl (meth) acrylate, dodecyl (meth) acrylate, cyclopentyl (meth) acrylate, cyclohexyl (meth) acrylate, tetrahydrofuryl (meth) acrylate, acetoacetoxyethyl (meth) acrylate, dicyclopentenyloxyethyl (meth) acrylate, and phenoxyethyl (meth) acrylate. Further, a condensate of an unsaturated acid, such as, e.g., maleic acid, fumaric acid, and itaconic acid, and alcohol can also be used. Moreover, various polyfunctional (meth) acrylates can be used.

### <Compound with Imide Ring>

The compound having an imide ring (including a resin having an imide ring) is preferably polyamideimide, bismaleimide, or a combination of bismaleimide and an allyl compound.

As the polyamideimide, commercially available products can be used, and examples thereof include a "polyamideimide resin HR-13NX" manufactured by Toyobo Co., Ltd., a "polyamideimide resin solution HPC series" manufactured by Hitachi Chemical Co., Ltd., and the like.

### (Bismaleimide)

A commercially available bismaleimide can be used. Examples thereof include: 4,4'-bismaleimide diphenylmethane, 1,6-bis(maleimido)hexane, bis (3-ethyl-5-methyl-4-maleimidophenyl) methane, 1,4-bis (maleimido)butane, bisphenol A Bis (4-maleimidophenyl ether), 1,2-bis(maleimido)ethane, N,N'-1,4-phenylenedimaleimide, N, N'-1,3-phenylenedimaleimide, 3,3'-dimethyl-5,5'-diethyl-4,4'-diphenylmethane bismaleimide, 4-methyl-1,3-phenylenebismaleimide, 1,6'-bismaleimide-(2,2,4-trimethyl)hexane, 4,4'-diphenyl ether bismaleimide, 4,4'-diphenylsulfone bismaleimide, 1,3-bis(3-maleimido Phenoxy) benzene, and 1,3-bis(4-maleimide phenoxy)benzene.

Bismaleimide is preferably used in combination with an allyl compound, preferably an allylated phenol compound, a radically polymerizable compound, an amine, and the like.

As an allyl compound, a commercially available product can be used. For example, 2,2'-diallylbisphenol A, trimethylolpropane diallyl ether, pentaerythritol triallyl ether, and the like can be exemplified.

The allylated phenol compound may be, in addition to the above-described 2,2'-diallylbisphenol A, a compound obtained by a well-known method in which phenolic resins are allyl-etherified, and the resulting allyl etherified phenolic resin is heated and subjected to a Claisen rearrangement. For example, an allylated phenolic resin obtained by converting the "BRG series" manufactured by Aika SDK Phenol Co., Ltd. into an allyl ether and subjecting it to a Claisen rearrangement can be preferably used.

The mixing ratio (equivalent ratio) of the bismaleimide and the allyl compound is preferably maleimide group / allyl group = 1.0/5.0 to 5.0/1.0, more preferably maleimide group / allyl group = 3.0/1.0 to 1.0/3.0. When the mixing ratio is outside this range, the adhesive properties and water resistance of the coating may sometimes decrease.

As the radical polymerizable compound, a known radical polymerizable resin, an oligomer, and a monomer can be used. Examples thereof include a vinyl ester resin, an unsaturated polyester resin, an allyl resin, a urethane (meth) acrylate, a (meth) acrylic monomer, a styrene monomer, divinylbenzene, and the like. The mixing ratio (equivalent ratio) of the bismaleimide and the radical polymerizable compound is preferably maleimide group / radically polymerizable unsaturated group = 5.0/1.0 to 1.0/5.0, more preferably maleimide group / radical polymerizable unsaturated group = 3.0/1.0 to 1.0/3.0. When the mixing ratio is outside this range, the adhesive properties and water resistance of the coating may sometimes decrease.

As the amine, a primary amine or a secondary amine having active hydrogen are preferred. Considering the heat resistance, as an example, diaminodiphenylmethane, diaminodiphenylsulfone, etc., can be exemplified, and the mixing ratio (equivalent ratio) of bismaleimide and amine is preferably maleimide group / active hydrogen = 5.0/1.0 to 1.0/5.0, more preferably maleimide group / active hydrogen = 3.0/1.0 to 1.0/3.0. When the mixing ratio is outside this range, the adhesive properties and water resistance of the coating may sometimes decrease.

Further, an allyl compound to be combined with bismaleimide, a radical polymerizable compounds, amines, and the like may be used alone or in combination.

### <Additive Agent>

In the present invention, in the above-described resin coating, for improving adhesive properties of the resin-cured coating and the aluminum article surface, it is effective to add a polymer containing any one or more of a hydroxyl group, a carboxyl group, and a quaternary ammonium cation as an additive agent to the resin composition for coating. With this addition, even without performing a chemical conversion treatment of the aluminum article surface, the additive agent is adsorbed on the surface of the aluminum article, and the hardened resin can be firmly bonded to the surface of the article. Examples of such additive agents include those manufactured by BYK Japan K.K: trade names "BYK-4510", "BYK-4512", and the like.

In the resin coating, in order to prevent dirt from adhering to the curing coating, it is effective to add a polymer having a fluorine segment as an additive agent to the resin composition for forming the coating. As an example of such an additive agent, for example, a product name "Modiper F206" manufactured by NOF Corporation can be exemplified.

### <Radical Polymerization Initiator>

As a radical polymerization initiator for curing an unsaturated polyester resin, a vinyl ester resin, a urethane (meth) acrylate resin, and a polyester (meth) acrylate resin, a peroxide catalyst can be used. As the peroxide catalyst, a known one can be used. For example, benzoyl peroxide, dicumyl peroxide, diisopropyl peroxide, di-t-butyl peroxide, t-butyl peroxybenzoate, 1,1-bis (t-butylperoxy) -3,3,5-trimethylcyclohexane 2,5-dimethyl-2,5-bis (t-butylperoxy) hexyne-3,3-isopropyl hydroperoxide, t-butyl hydroperoxide, dicumyl peroxide, dicumyl hydroperoxide, acetyl peroxide oxide, bis (4-t-butylcyclohexyl) peroxydicarbonate, diisopropylperoxydicarbonate, isobutyl peroxide, 3,3,5-trimethylhexanoyl peroxide, lauryl peroxide, azobisisobutyronitrile, azobis carboxylic amide can be used.

### <Curing Accelerator>

For the formation of the cured coating composed of a combination of an epoxy resin and a phenolic resin and the cured coating using a compound having an imide ring, a curing accelerator can be used.

As an example of a curing accelerator used for combining an epoxy resin and a phenolic resin, a known amine system and/or phosphorus system curing accelerator can be exemplified. As the amine accelerator, a tertiary amine and an imidazole compound can be used, and as the phosphorus accelerator, a phosphine accelerator or the like can be used. Specific examples of amine accelerators include: triethylamine, N, N-dimethylpiperazine, triethylenediamine, 2,4,6-tris (dimethylaminomethyl) phenol, 2-methylimidazole, 2-undecylimidazole, 2-heptadecylimidazole, 1,2-dimethylimidazole, 2-ethyl-4-methylimidazole, 2-phenylimidazole, 2 tritertiary butylphosphine-phenyl-4-methylimidazole, 1-benzyl-2-methylimidazole, 1-benzyl-2-phenylimidazole and the like.

Specific examples of phosphorus accelerators include triphenylphosphine, tritertiary butylphosphine, triparatolylphosphine, diphenylcyclohexylphosphine, tricyclohexylphosphine, ethyltriphenylphosphonium bromide, benzyltriphenylphosphonium chloride, tetraphenyl phosphonium tetra-p-tolylborate, tetraphenylphosphonium tetraphenylborate, tetraphenylphosphonium bromide, tetrabutylphosphonium bromide, and triphenylphosphine oxide.

The amount of the amine-based and/or phosphorus-based curing accelerator used is 0.05 to 10 parts by weight, preferably 0.3 to 3.0 parts by weight with respect to 100 parts by weight of the resin composition for forming the coating. When it is less than 0.05 parts by weight, the effect of promoting the curing is poor, and when it exceeds 10 parts by weight, a coating with good water resistance may not be obtained.

When using a bismaleimide or a combination of a bismaleimide and an allyl compound as a compound having an imide ring, for curing a bismaleimide, radical polymerization may be positively used in combination with a peroxide catalyst as an accelerator for curing a bismaleimide/allyl compound or a bismaleimide/radical polymerization compound.

Next, a method for further applying a resin coating to the aluminum article surface-treated by the method according to the present invention will be described in detail.

### <Resin Coating Method for Aluminum Article>

When the coating resin is a low-viscosity liquid, it may be used directly for coating, but a thin film can be formed by using a solvent. Any solvent can be used as long as it can dissolve or disperse the resin, and any known solvent can be used. Specifically, alcohols, such as, e.g., methyl alcohol, ethyl alcohol, propyl alcohol, butanol, glycols, such as, e.g., ethylene glycol and propylene glycol, glycol ethers, such as, e.g., ethylene glycol monomethyl ether, ethylene glycol monoethyl ether, propylene glycol monomethyl ether, propylene glycol monoethyl ether, butylene glycol monomethyl ether, butylene glycol monoethyl ether, butylene glycol monopropyl ether, ketones, such as, e.g., acetone, methyl ethyl ketone, methyl isobutyl ketone, esters, such as, e.g., ethyl acetate, propyl acetate, butyl acetate, ethyl lactate, ethylene glycol monomethyl ether acetate, propylene glycol monomethyl ether acetate, 1,4-dioxane ethers such like, and common ones, such as water, can be used alone, or in combination of two or more thereof.

The concentration of the resin liquid obtained by diluting the resin with a solvent may be about 5% to 80% by weight. The resin solution is preferably applied to the surface of the aluminum article so that the coating thickness before volatilization of the solvent is 25 µm or less, preferably 17 µm or less, or the coating thickness after curing is 20 µm or less, preferably 17 µm or less. If the thickness of the coating before volatilization of the solvent exceeds 25 µm or the thickness of the coating after curing exceeds 20 µm, the thermal conductivity is lowered, which is not preferable. It is desirable to adjust the concentration of the resin composition for producing the coating so that the thickness of the coating becomes the above-described value or less. The lower limit of the coating thickness before solvent evaporation and the lower limit of the coating thickness after curing are not particularly limited, but the thickness of the coating before volatilization of the solvent is preferably 1 µm or more, and the thickness of the coating after curing is preferably 0.5 µm or more.

The method for forming a coating film using the above-described resin on a surface of an aluminum article subjected to any one or more of an etching treatment, a boehmite treatment, and a zirconium treatment and further subjected to any one or more of a silane coupling agent treatment, an isocyanate compound treatment, and a thiol compound treatment is not particularly limited, but a resin solution obtained by diluting a resin with a solvent is uniformly applied to the surface of the aluminum article, and the solvent is volatilized at room temperature or low temperature, and then the coating is cured at a predetermined baking temperature. When the coating film is formed to have a two-layer structure, the same operation is performed again after the first layer is formed.

The baking temperature is not particularly limited, but is generally 50 °C to 250 °C. The baking temperature is appropriately selected depending on the resin type. A high temperature is desirable for baking in a short time. The baking time is appropriately selected within the range of 5 minutes to 150 minutes, for example, in relation to the baking temperature.

In the method for producing an aluminum article with a resin coating according to the present invention, a typical example of the aluminum article is a constituent element of a heat exchanger, which is produced by brazing (preferably vacuum brazing) combined aluminum members.

Next, a method of laminating FRP (fiber reinforced plastic) on the surface of an aluminum article treated by a primary treatment and a secondary treatment will be described.

The method of laminating an FRP on the surface of the aluminum article subjected to at least one of an etching treatment, a boehmite treatment, a zirconium treatment, and at least one of a silane coupling agent treatment, an isocyanate compound treatment, and a thiol compound treatment may be a known method. For example, a handle up using a coating resin and a glass fiber, a carbon fiber, an aramid fiber, etc., a press molding and an injection molding of molding a material and a prepreg, a resin transfer molding (RTM molding), a filament winding molding (FW molding), and a drawing molding (PL molding) can be exemplified. As the fiber of the glass fiber, the carbon fiber, the aramid fiber, etc., any known properties of a roving, a cloth, and a mat can be used.

Therefore, the composite material in which the resin coating 30 or the FRP 30 is laminated on the surface of the aluminum article 9 is configured such that as shown in FIG. 2, an organic material layer (resin coating layer, FRP layer) 30 is laminated on the surface 14 on the side where the functional group of the surface-treated aluminum article 1 is provided.

### EXAMPLES

Hereinafter, the present invention will be described in detail with reference to Examples and Comparative Examples, but the present invention is not limited thereto.

### (Synthesis Example 1) Synthesis of Allylated Phenolic Resin

In a flask equipped with a stirrer and a reflux tube, potassium carbonate: 720 g, triphenylphosphine: 12 g, water: 1,100 g, 5% Pd/C: 4 g, phenol novolac resin "BRG556" manufactured by Aika SDK Phenol Co., Ltd.: 104 g (1.0 equivalents) and allyl acetate: 569 g (1.2 equivalents), and the reaction was continued at 90 °C for 8 hours.

Next, the reaction solution was cooled to 40 °C, 400 g of toluene and 400 g of water were added, and after stirring, the reaction solution was filtered and separated to remove the toluene layer, and toluene and allyl acetate were distilled off under reduced pressure. Thereafter, 400 g of toluene was further added to the residue and dissolved in toluene, and the resulting toluene solution was washed with water three times. Thereafter, toluene was distilled off under reduced pressure to obtain BRG556 allyl ether in a yield of 95%.

This BRG556 allyl ether was charged into a flask and stirred at 160 °C for 3 hours to carry out a Claisen rearrangement reaction to obtain an allylated phenolic resin BRG556CL.

### (Example 1)

### <Production Of Varnish>

A coating varnish-1 was prepared by adding 0.4 parts by weight of 2,4,6-tris (dimethylaminomethyl) phenol (DMP-30) to the resulting solution in which (A) Epicoat 1001: 24 parts by weight as an epoxy resin, and (B) a phenolic resin "BRL-240" manufactured by Aika SDK Phenol Co., Ltd.: 16 parts by weight as a phenolic resin was dissolved in a solution composed of MEK: 50 parts by weight / water: 60 parts by weight.

### <Production of Coated Aluminum Test Piece>

### (Primary Treatment)

An aluminum plate of 50 mm × 90 mm (thickness: 2.0 mm) (table: No. 3000, back: No. 4000 brazed) was prepared, and this plate was subjected to an etching treatment with sodium hydroxide (soaked in 5% sodium hydroxide aqueous solution for 1.5 minutes, neutralized with 5% nitric acid, washed with water and dried).

### (Secondary Treatment)

Next, an aluminum plate subjected to a primary treatment was immersed in a solution in which pentaerythritol tetrakis (3-mercaptobutyrate) (trade name: Karenz MT PE1, manufactured by Showa Denko K.K.): 5.44 g (0.01 mol) was dissolved in 100 g of toluene at 30°C for two hours and then lifted and dried.

### (Resin Coating)

Next, the coating varnish-1 was applied to the aluminum plate subjected to the secondary treatment by spraying to a thickness of 12 µm, and this coated aluminum plate was left to dry in an 80 °C dryer for 30 minutes, and further, the coating was cured by leaving it in a 200 °C dryer for 10 minutes to form a first cured coating.

Subsequently, a coating varnish-1 was applied to the surface of the first cured coating by spraying to a thickness of 12 µm, and this coated aluminum plate was left in an 80 °C dryer for 30 minutes to dry. The coating was further allowed to stand in a 200° dryer for 50 minutes to cure the coating, thereby forming a second cured coating.

Thus, an aluminum test piece having a two-layer coating thickness of 10 µm was obtained.

### <Thermal Conductivity>

About the test piece, the heat conductivity was measured by the laser flash method. The measurement result was 121 W/m·k. It was possible to suppress the reduction to 30% or less with respect to the measured value of the thermal conductivity (Comparative Example 1 described later) of the aluminum plate before coating. The results are shown in Table 1.

### <Corrosion Resistance Test 1>

When the test piece was immersed in hot spring water (pH = 2, 53°C) in Kusatsu Onsen, Gunma Prefecture for 1 month, hot spring flowers adhered. The hot water flowers adhered to the lifted test piece could be washed away with tap water. When the appearance was observed after drying and the change in weight was measured, the appearance did not swell and the weight loss was as extremely small as 0.0041 g. The results are shown in Table 1.

### <Corrosion Resistance Test 2>

When the test piece was immersed in hot spring water (pH = 8.2, 97 °C) in Obama Onsen, Nagasaki Prefecture for one month, a calcium carbonate scale adhered. The calcium carbonate scale adhered to the pulled test piece was easily peeled off by the impact force when the piece was dropped from a height of 50 cm after drying. When the appearance was observed and the change in weight was measured, the appearance did not swell and the weight loss was as small as 0.0024 g. The results are shown in Table 1.

### (Example 2)

### <Preparation of Varnish>

The same coating varnish-1 as in Example 1 was used.

### <Production of Coated Aluminum Test Piece>

### (Primary Treatment)

A aluminum plate of 50 mm × 90 mm (thickness: 2.0 mm) (table: No. 3000, back: No. 4000 brazed) was prepared, and an etching treatment with sodium hydroxide (immersed in 5% sodium hydroxide aqueous solution for 1.5 minutes, neutralized with 5% nitric acid, washed with water and dried). This was further boiled in water for 3 minutes in triethanolamine 0.3% by weight for a boehmite treatment.

### (Secondary Treatment)

Next, the aluminum plate subjected to the primary treatment was immersed in a solution prepared by dissolving 2.50 g (0.01 mol) of diphenylmethane diisocyanate (MDI) in 100 g of toluene at 50 °C for 4 minutes, and then lifted and dried.

### (Resin Coating)

Next, the coating varnish-1 was applied to the aluminum plate subjected to the secondary treatment by spraying to a thickness of 24 µm, and this coated aluminum plate was left to dry in an 80 °C dryer for 30 minutes, and further, the coating was cured by leaving it in a 200 °C dryer for 10 minutes to form a cured coating.

Thus, an aluminum test piece having a one-layer coating thickness of 10 µm was obtained.

### <Thermal Conductivity>

About the test piece, the heat conductivity was measured by the laser flash method. The measurement result was 121 W/m·k. It was possible to suppress the reduction to 30% or less with respect to the measured value of the thermal conductivity (Comparative Example 1 described later) of the aluminum plate before coating. The results are shown in Table 1.

### <Corrosion Resistance Test 1>

When the test piece was immersed in hot spring water (pH = 2, 53°C) in Kusatsu Onsen, Gunma Prefecture for 1 month, hot spring flowers adhered. The hot water flowers adhered to the lifted test piece could be washed away with tap water. When the appearance was observed after drying and the change in weight was measured, the appearance did not swell and the weight loss was as extremely small as 0.0048 g. The results are shown in Table 1.

### <Corrosion Resistance Test 2>

When the test piece was immersed in hot spring water (pH = 8.2, 97 °C) in Obama Onsen, Nagasaki Prefecture for one month, a calcium carbonate scale adhered. The calcium carbonate scale adhered to the pulled test piece was easily peeled off by the impact force when the piece was dropped from a height of 50 cm after drying. When the appearance was observed and the change in weight was measured, the appearance did not swell and the weight loss was as small as 0.0031 g. The results are shown in Table 1.

### (Example 3)

### <Preparation of Varnish>

The same coating varnish-1 as in Example 1 was used.

### <Production of Coated Aluminum Test Piece>

### (Primary Treatment)

An aluminum plate of 50 mm × 90 mm (thickness: 2.0 mm) (table: No. 3000, back: No. 4000 brazed) was prepared, and this plate was subjected to an etching treatment with sodium hydroxide (soaked in 5% sodium hydroxide aqueous solution for 1.5 minutes, neutralized with 5% nitric acid, washed with water and dried). This was further immersed in a zirconium phosphate treatment solution (palcoat 3762 manufactured by Nihon Parkerizing Co., Ltd.) at 60 °C for 2 minutes, washed with water, and subjected to a zirconium treatment through a drying process.

### (Secondary Treatment)

Next, the aluminum plate subjected to the primary treatment was added to a solution of N-2-(aminoethyl) -3-aminopropyltrimethoxysilane: 2.22 g (0.01 mol) in 100 g of toluene at 70 °C after soaking for three minutes, it was lifted and dried.

### (Resin Coating)

Next, the coating varnish-1 was applied to the aluminum plate subjected to the secondary treatment by spraying to a thickness of 24 µm, and this coated aluminum plate was left to dry in an 80 °C dryer for 30 minutes, and further, the coating was cured by leaving it in a 200 °C dryer for 10 minutes to form a cured coating.

Thus, an aluminum test piece having a one-layer coating thickness of 10 µm was obtained.

### <Thermal Conductivity>

About the test piece, the heat conductivity was measured by the laser flash method. The measurement result was 120 W/m·k. It was possible to suppress the reduction to 30% or less with respect to the measured value of the thermal conductivity (Comparative Example 1 described later) of the aluminum plate before coating. The results are shown in Table 1.

### <Corrosion Resistance Test 1>

When the test piece was immersed in hot spring water (pH = 2, 53°C) in Kusatsu Onsen, Gunma Prefecture for 1 month, hot spring flowers adhered. The hot water flowers adhered to the lifted test piece could be washed away with tap water. When the appearance was observed after drying and the change in weight was measured, the appearance did not swell and the weight loss was as extremely small as 0.0051 g. The results are shown in Table 1.

### <Corrosion Resistance Test 2>

When the test piece was immersed in hot spring water (pH = 8.2, 97 °C) in Obama Onsen, Nagasaki Prefecture for one month, a calcium carbonate scale adhered. The calcium carbonate scale adhered to the pulled test piece was easily peeled off by the impact force when the piece was dropped from a height of 50 cm after drying. When the appearance was observed and the change in weight was measured, the appearance did not swell and the weight loss was as small as 0.0038 g. The results are shown in Table 1.

### (Example 4)

### <Production of Varnish>

A polyamideimide resin "HR-13NX" manufactured by Toyobo Co ., Ltd.: 30 parts by weight was dissolved in a mixed solvent of 70 parts by weight of N-methylpyrrolidone / xylene = 67 parts by weight / 33 parts by weight to prepare a coating varnish-2.

### (Primary Treatment)

An aluminum plate of 50 mm × 90 mm (thickness: 2.0 mm) (table: No. 3000, back: No. 4000 brazed) was prepared, and boiled in triethanolamine 0.3% by weight water for 3 minutes and subjected to a boehmite treatment.

### (Secondary Treatment)

Next, the aluminum plate subjected to the primary treatment was manufactured by Showa Denko K.K.: PE-1: 5.44 g (0.01 mol), 3-methacryloxypropyltrimethoxysilane (KBM-503 manufactured by Shin-Etsu Silicon, Co., Ltd.), immersed in a solution of 2.48 g (0.01 mol) dissolved in 100 g of toluene at 70 °C for 3 minutes, and then lifted and dried.

### (Resin Coating)

Next, the coating varnish-2 was applied to the aluminum plate subjected to the secondary treatment by spraying to a thickness of 24 µm, and this coated aluminum plate was left to dry in an 80 °C dryer for 30 minutes, and further, the coating was cured by leaving it in a 200 °C dryer for 10 minutes to form a cured coating.

Thus, an aluminum test piece having a one-layer coating thickness of 10 µm was obtained.

### <Thermal Conductivity>

About the test piece, the heat conductivity was measured by the laser flash method. The measurement result was 122 W/m·k. It was possible to suppress the reduction to 30% or less with respect to the measured value of the thermal conductivity (Comparative Example 1 described later) of the aluminum plate before coating. The results are shown in Table 1.

### <Corrosion Resistance Test 1>

When the test piece was immersed in hot spring water (pH = 2, 53°C) in Kusatsu Onsen, Gunma Prefecture for 1 month, hot spring flowers adhered. The hot water flowers adhered to the lifted test piece could be washed away with tap water. When the appearance was observed after drying and the change in weight was measured, the appearance did not swell and the weight loss was as extremely small as 0.0055 g. The results are shown in Table 1.

### <Corrosion Resistance Test 2>

When the test piece was immersed in hot spring water (pH = 8.2, 97 °C) in Obama Onsen, Nagasaki Prefecture for one month, a calcium carbonate scale adhered. The calcium carbonate scale adhered to the pulled test piece was easily peeled off by the impact force when the piece was dropped from a height of 50 cm after drying. When the appearance was observed and the change in weight was measured, the appearance did not swell and the weight loss was as small as 0.0039 g. The results are shown in Table 1.

### (Example 5)

### <Production of Varnish>

A varnish-3 for coating was prepared by adding 2.5 parts by weight of scaly graphite (graphite) CNP7 manufactured by Ito Graphite Industries Co., Ltd., to a solution obtained by dissolving 15 parts by weight of bismaleimide BMI-1100 manufactured by Daiwa Kasei Kogyo Co., Ltd., 15 parts by weight of allylated phenolic resin BRG556CL, 10 parts by weight of phenoxy resin PKHB manufactured by Inchem Corporatuion to 60 parts by weight of γ-butyrolactone.

### (Primary Treatment)

An aluminum plate of 50 mm × 90 mm (thickness: 2.0 mm) (table: No. 3000, back: No. 4000 brazed) was prepared, and treated with a zirconium phosphate treatment solution (palcoat 3762 manufactured by Nihon Parkerizing Co., Ltd.). This plate was immersed in 60 °C for 2 minutes, washed with water and dried, followed by a zirconium treatment.

### (Secondary Treatment)

Next, the aluminum plate subjected to the primary treatment was manufactured by Showa Denko K.K.: PE-1: 5.44 g (0.01 mol), 3-methacryloxypropyltrimethoxysilane (KBM-503 manufactured by Shin-Etsu Silicon, Co., Ltd.), immersed in a solution of 2.48 g (0.01 mol) dissolved in 100 g of toluene at 70 °C for 3 minutes, and then lifted and dried.

### (Resin Coating)

Next, the coating varnish-1 was applied to the aluminum plate subjected to the secondary treatment by spraying to a thickness of 12 µm, and this coated aluminum plate was left to dry in an 80 °C dryer for 30 minutes, and further, the coating was cured by leaving it in a 200 °C dryer for 10 minutes to form a cured coating. Subsequently, coating varnish-3 was applied so as to have a thickness of 12 µm, and this coated aluminum plate was left to stand in an 80 °C dryer for 30 minutes and then dried in a 200 °C dryer for 10 minutes to be cured to form a cured coating.

Thus, an aluminum test piece having a two-layer coating thickness of 10 µm was obtained.

### <Thermal Conductivity>

About the test piece, the heat conductivity was measured by the laser flash method. The measurement result was 123 W/m·k. It was possible to suppress the reduction to 30% or less with respect to the measured value of the thermal conductivity (Comparative Example 1 described later) of the aluminum plate before coating. The results are shown in Table 1.

### <Corrosion Resistance Test 1>

When the test piece was immersed in hot spring water (pH = 2, 53°C) in Kusatsu Onsen, Gunma Prefecture for 1 month, hot spring flowers adhered. The hot water flowers adhered to the lifted test piece could be washed away with tap water. When the appearance was observed after drying and the change in weight was measured, the appearance did not swell and the weight loss was as extremely small as 0.0045 g. The results are shown in Table 1.

### <Corrosion Resistance Test 2>

When the test piece was immersed in hot spring water (pH = 8.2, 97 °C) in Obama Onsen, Nagasaki Prefecture for one month, a calcium carbonate scale adhered. The calcium carbonate scale attached to the pulled test piece was peeled off by the impact force when the piece was dropped five times from a height of 50 cm after drying. When the appearance was observed and the change in weight was measured, the appearance did not swell and the weight loss was as small as 0.0021 g. The results are shown in Table 1.

### (Example 6)

### <Production of Varnish>

Cobalt octylate: 0.5 parts by weight and organic peroxide catalyst 328E: 1.5 parts by weight were added to a vinyl ester resin manufactured by Showa Denko K.K.: 100 parts by weight to prepare coating varnish-4.

### (Primary Treatment)

An aluminum plate of 50 mm × 90 mm (thickness: 2.0 mm) (table: No. 3000, back: No. 4000 brazed) was prepared and subjected to an etching treatment and a boehmite treatment in the same manner as in Example 2.

### (Secondary Treatment)

Next, an aluminum plate subjected to a primary treatment was immersed in a solution in which 2-methacryloyloxyethyl isocyanate (Carenz MOI manufactured by Showa Denko K.K.): 2.50 g (0.01 mol) was dissolved in 100 g of toluene at 40 °C for five minutes, and then lifted and dried.

### (Resin Coating)

Next, the coating varnish-4 was applied to the aluminum plate subjected to a secondary treatment by spraying to a thickness of 11 µm, and this coated aluminum plate was allowed to stand in an 80 °C dryer for 30 minutes + 120 °C for 30 minutes to form a cured coating.

Thus, an aluminum test piece having a one-layer coating thickness of 10 µm was obtained.

### <Thermal Conductivity>

About the test piece, the heat conductivity was measured by the laser flash method. The measurement result was 120 W/m·k. It was possible to suppress the reduction to 30% or less with respect to the measured value of the thermal conductivity (Comparative Example 1 described later) of the aluminum plate before coating. The results are shown in Table 2.

### <Corrosion Resistance Test 1>

When the test piece was immersed in hot spring water (pH = 2, 53°C) in Kusatsu Onsen, Gunma Prefecture for 1 month, hot spring flowers adhered. The hot water flowers adhered to the lifted test piece could be washed away with tap water. When the appearance was observed after drying and the change in weight was measured, the appearance did not swell and the weight loss was as extremely small as 0.0062 g. The results are shown in Table 2.

### <Corrosion Resistance Test 2>

When the test piece was immersed in hot spring water (pH = 8.2, 97 °C) in Obama Onsen, Nagasaki Prefecture for one month, a calcium carbonate scale adhered. The calcium carbonate scale attached to the pulled test piece was peeled off by the impact force when the piece was dropped five times from a height of 50 cm after drying. When the appearance was observed and the change in weight was measured, the appearance did not swell and the weight loss was as small as 0.0041 g. The results are shown in Table 2.

### Comparative Example 1

The aluminum plate used in the examples (table: No. 3000, back: No. 4000 brazed) was used as it was as a test piece, and the thermal conductivity was measured. The obtained thermal conductivity was 161 W/m·k.

When a corrosion resistance test was performed using the above test pieces, the test pieces suspended by the strings in both the corrosion resistance tests 1 and 2 disappeared.

### Comparative Example 2

In Example 1, a test piece was prepared in exactly the same manner as in Example 1 except that secondary treatment was not performed.

### <Thermal Conductivity>

About the test piece, the heat conductivity was measured by the laser flash method in the same manner as in the Example. The measurement result was 121 W/m·k.

### <Corrosion Resistance Test 1>

When the test piece was immersed in hot spring water (pH = 2, 53°C) in Kusatsu Onsen, Gunma Prefecture for 1 month, hot spring flowers adhered. The hot water flowers adhered to the lifted test piece could be washed away with tap water. When the appearance was observed after drying and the change in weight was measured, the appearance did not swell, but the weight loss was as large as 0.3854 g. The results are shown in Table 2.

### <Corrosion Resistance Test 2>

When the test piece was immersed in hot spring water (pH = 8.2, 97 °C) in Obama Onsen, Nagasaki Prefecture for one month, a calcium carbonate scale adhered. The calcium carbonate scale attached to the pulled test piece was peeled off by the impact force when the piece was dropped from a height of 50 cm after drying. When the appearance was observed after drying and the change in weight was measured, the appearance did not swell, but the weight loss was as extremely large as 0.2217 g. The results are shown in Table 2.

### Comparative Example 3

In Example 5, a test piece was prepared in exactly the same manner as in Example 5 except that secondary treatment was not performed.

### <Thermal Conductivity>

About the test piece, the heat conductivity was measured by the laser flash method in the same manner as in the Example. The measurement result was 121 W/m·k.

### <Corrosion Resistance Test 1>

When the test piece was immersed in hot spring water (pH = 2, 53°C) in Kusatsu Onsen, Gunma Prefecture for 1 month, hot spring flowers adhered. The hot water flowers adhered to the lifted test piece could be washed away with tap water. When the appearance after drying was observed and the change in weight was measured, the appearance was swollen and the weight loss was as large as 0.4516 g. The results are shown in Table 2.

### <Corrosion Resistance Test 2>

When the test piece was immersed in hot spring water (pH = 8.2, 97 °C) in Obama Onsen, Nagasaki Prefecture for one month, a calcium carbonate scale adhered. The calcium carbonate scale attached to the pulled test piece was peeled off by the impact force when the piece was dropped five times from a height of 50 cm after drying. When the appearance was observed and the change in weight was measured, the appearance was swollen and the weight loss was an extremely large value of 0.2856 g. The results are shown in Table 2.

### (Example 7)

An aluminum oil cooler (manufactured by Showa Denko K.K.) for industrial machinery was prepared, the oil inlet and outlet were plugged, and a resin coating was applied to the entire surface by the following procedure.

### <Primary Treatment>

An aluminum oil cooler (made by Showa Denko K.K.) for industrial machinery was subjected to an etching treatment with sodium hydroxide (immersed in 5% sodium hydroxide aqueous solution for 1.5 minutes, neutralized with 5% nitric acid, washed with water and dried). This cooler was further immersed in a zirconium phosphate treatment solution (palcoat 3762 manufactured by Nihon Parkerizing Co., Ltd.) at 60 °C for 2 minutes, washed with water, and subjected to a zirconium treatment through a drying process.

### <Secondary Treatment>

Next, an aluminum oil cooler subjected to a primary treatment was immersed in a solution in which PE-1: 5.44 g (0.01 mol) manufactured by Showa Denko K.K. and Karenz MOI: 2.50 g (0.01 mol) manufactured by Showa Denko K.K. was dissolved in 100 g of toluene at 40 °C for 5 hours. Then, the cooler was lifted and dried.

### <First Cured Coating Coating>

An oil cooler made of aluminum was immersed in the coating varnish-1 used in Example 1 for 1 minute, pulled up to drain the liquid, and then the excess varnish was blown off by air blow. Thus, a coating film having a thickness of 12 µm was formed on the entire surface of the oil cooler. This oil cooler with a coating film was left to stand in an 80 °C dryer for 30 minutes to dry, and further left to stand in a 200 °C dryer for 10 minutes to cure the coating to form a first cured coating.

### <Second Cured Coating Coating>

After cooling, the oil cooler with the first curing coating was again immersed in the coating varnish-1 for 1 minute, pulled up to drain the liquid, and then the excess varnish was blown off by air blow. Thus, a coating film having a thickness of 12 µm was formed on the entire surface of the first cured coating of the oil cooler. This oil cooler with a coating film was left to stand in an 80 °C dryer for 30 minutes to dry, and further left to stand in a 200 °C dryer for 50 minutes to cure the coating to form a first cured coating.

Thus, an aluminum oil cooler (resin-coated oil cooler) coated with a two-layer structure coating (total film thickness: 10 µm) was produced.

### <Heat Exchange Experiment>

A rubber hose was connected to the oil inlet and outlet of the aluminum oil cooler coated with a hardened coating. The oil cooler was submerged in a well with a water temperature of 16.5 °C, and an antifreeze solution at 30 °C was flowed at a rate of 13 liters/minute. It was confirmed that the temperature of the antifreeze liquid reached 24 °C at the outlet.

### <Long-Term Immersion Test>

The aluminum oil cooler with the above cured coating coating was immersed in well water for half a year, but there was no abnormality in the appearance.

### (Example 8)

An aluminum plate of 10 mm × 150 mm (thickness: 2.0 mm) (table: No. 3000, back: No. 4000 brazed) was prepared, and the same primary treatment and secondary treatment as in Example 6 were performed.

Next, a photocurable FRP sheet, showzet VE-1000S (prepreg sheet made of a photocured vinyl ester resin + a 1 ply of glass mat) 10 mm x 150 mm (thickness: 1.0 mm) was laminated so as to have a wrap portion of 5 cm. The material was cured by irradiation with sunlight for 10 minutes.

When the tensile shear adhesive strength test (JISK6850) was performed to confirm the adhesive strength of the lap portion of the cured product, the FRP portion was destroyed at 21 MPa.

### (Comparative Example 4)

An aluminum plate of 10 mm × 150 mm (thickness: 2.0 mm) (No. 3000) and back: No. 4000 was brazed), and only acetone was wiped.

Next, a photocurable FRP sheet, "showzet VE-1000S" (prepreg sheet made of a photocured vinyl ester resin + a 1 ply of glass mat) 10 mm x 150 mm (thickness: 1.0 mm) was laminated so as to have a wrap portion of 5 cm. The material was cured by irradiation with sunlight for 10 minutes.

A tensile shear bond strength test (JIS K6850) was performed to confirm the adhesive strength of the wrap portion of the cured product, and it was found that the wrap portion was peeled off at 2 MPa.

### (Example 9)

### <Formation of Pressure Vessel>

A cylindrical aluminum liner having a dome portion on both sides of a cylindrical body (length of the body: 593 mm, outer diameter of the body: 380 mm, total length including the dome: 830 mm, wall thickness: 4 mm) was subjected to the same primary treatment and secondary treatment as in Example 6.

Next, a glass roving impregnated with a visible light curable vinyl ester resin [trade name, Lipoxy LC-720 (manufactured by Showa Denko K.K.)] (RS240 PE-535, manufactured by Nittobo Co., Ltd.) was wound by a filament winding method so that the helical winding became a layer thickness of 0.98 mm, and then the hoop winding became a thickness of 0.6 mm (fiber content: 50 vol%).

After winding, three 600 W metal halide lamps as light sources including a wavelength region of 380 to 1200 nm were arranged, and the molded body was irradiated with light while being rotated so that the light intensity of 380 to 450 nm on the irradiated surface became 50 mW/cm². As a result, it was cured in 30 minutes, and a pressure vessel laminated with an FRP could be formed in a short time.

### <Internal Pressure Test>

Using a burst test device, water was injected while increasing the internal pressure while observing the state of the container strain with a strain gauge attached to the surface of the container. As a result, at the internal pressure of 8 MPa, bursting occurred at a position 80 mm away from the body dome. It was confirmed that it was as designed.

In addition, it was confirmed that the destructive material was adhered to the aluminum of the container without peeling off the FRP, and the aluminum and the FRP were firmly bonded.

**[Table 1]**

| | | Ex. 1 | Ex. 2 | Ex. 3 | Ex. 4 | Ex. 5 |
|---|---|---|---|---|---|---|
| Primary treatment (anchor effect) | Etching treatment | ○ | ○ | ○ | | |
| | Boehmite treatment | | ○ | | ○ | |
| | Zirconium treatment | | | ○ | | ○ |
| Secondary treatment (chemical bond) | Silane coupling agent treatment | | | ○ | ○ | ○ |
| | Isocyanate compound treatment | | ○ | | | |
| | Thiol compound treatment | ○ | | | | |
| Coating agent | Coating varnish-1 | ○ | ○ | ○ | | ○ |
| | | Double layer coat | One layer coat | One layer coat | | One layer coat |
| | Coating varnish-2 | | | | ○ | |
| | | | | | One layer coat | |
| | Coating varnish-3 | | | | | ○ |
| | | | | | | One layer coat |
| | Coating varnish-4 | | | | | |
| Thermal conductivity | w/m•k | 121 | 121 | 120 | 122 | 123 |
| Corrosion resistance test 1 | Appearance | No swelling on both sides | No swelling on both sides | No swelling on both sides | No swelling on both sides | No swelling on both sides |
| | Weight loss (g) | 0.0041 | 0.0048 | 0.0051 | 0.0055 | 0.0045 |
| Corrosion resistance test 2 | Appearance | No swelling on both sides | No swelling on both sides | No swelling on both sides | No swelling on both sides | No swelling on both sides |
| | Weight loss (g) | 0.0024 | 0.0031 | 0.0038 | 0.0039 | 0.0021 |

| | | | | | | |
|---|---|---|---|---|---|---|
| "○" denotes that it was carried out | | | | | | |

**[Table 2]**

| | | Ex. 6 | Comp. Ex. 1 | Comp. Ex. 2 | Comp. Ex. 3 |
|---|---|---|---|---|---|
| Primary treatment (anchor effect) | Etching treatment | ○ | | ○ | |
| | Boehmite treatment | ○ | | | |
| | Zirconium treatment | | | | ○ |
| Secondary treatment (chemical bond) | Silane coupling agent treatment | | | | |
| | Isocyanate compound treatment | ○ | | | |
| | Thiol compound treatment | | | | |
| Coating agent | Coating varnish-1 | | | ○ | ○ |
| | | | | Double layer coat | One layer coat |
| | Coating varnish-2 | | | | |
| | Coating varnish-3 | | | | ○ |
| | | | | | One layer coat |
| | Coating varnish-4 | ○ | | | |
| | | One layer coat | | | |
| Thermal conductivity | w/m•k | 120 | 161 | 121 | 120 |
| Corrosion resistance test 1 | Appearance | No swelling on both sides | Disappeared | No swelling on both sides | No swelling on both sides |
| | Weight loss (g) | 0.0062 | | 0.3854 | 0.4516 |
| Corrosion resistance test 2 | Appearance | No swelling on both sides | Disappeared | No swelling on both sides | No swelling on both sides |
| | Weight loss (g) | 0.0041 | | 0.2217 | 0.2856 |

| | | | | | |
|---|---|---|---|---|---|
| "○" denotes that it was carried out | | | | | |

The present application claims priority to Japanese Patent Application No. 2017-139808 filed on July 19, 2017, the entire disclosure of which is incorporated herein by reference in its entirety.

It should be understood that the terms and expressions used herein are used for explanation and have no intention to be used to construe in a limited manner, do not eliminate any equivalents of features shown and mentioned herein, and allow various modifications falling within the claimed scope of the present invention. The present invention allows any design changes unless departing from its spirit within the scope of the claims.

### Description of Reference Symbols

- 1:: surface-treated aluminum article
- 2:: surface-treated portion
- 3:: portion where functional group is provided
- 9:: aluminum article
- 14:: surface on a side where a functional group is provided
- 30:: organic material layer (resin coating layer, FRP layer)

## Claims

1. A method for treating a surface of an aluminum article, the method comprising:
subjecting the surface of the aluminum article to at least one of an etching treatment, a boehmite treatment, and a zirconium treatment; and
further subjecting the surface to at least one of a silane coupling agent treatment, an isocyanate compound treatment, and a thiol compound treatment.

2. The method for treating a surface of an aluminum article,
wherein the etching treatment as recited in claim 1 is performed by using at least one of a sodium hydroxide aqueous solution and a potassium hydroxide aqueous solution.

3. The method for treating a surface of an aluminum article,
wherein the zirconium treatment as recited in claim 1 is performed by using zirconium phosphate.

4. The method for treating a surface of an aluminum article,
wherein the silane coupling agent treatment as recited in claim 1 is performed by using a silane coupling agent having at least one selected from the group consisting of an amino group, an epoxy group, a (meth) acryloyl group, and a triazine thiol group.

5. The method for treating a surface of an aluminum article,
wherein the isocyanate compound treatment as recited in claim 1 is performed by using an isocyanate compound having a (meth) acryloyl group.

6. The method for treating a surface of an aluminum article,
wherein the thiol compound treatment as recited in claim 1 is performed by using at least one of a primary thiol compound and a secondary thiol compound.

7. The method for treating a surface of an aluminum article, further comprising:
subjecting the aluminum article subjected to a surface treatment by the method as recited in any one of claims 1 to 6 to a resin coating.

8. The method for treating a surface of an aluminum article,
wherein a resin used for the resin coating as recited in claim 7 is at least one selected from the group consisting of an epoxy resin, a phenolic resin, an unsaturated polyester resin, a vinyl ester resin, and a compound having an imide ring.

9. The method for treating a surface of an aluminum article, further comprising:
laminating a fiber-reinforced plastic (FRP) on the aluminum article subjected to a surface treatment by the method as recited in any one of claims 1 to 6.

10. The method for treating a surface of an aluminum article as recited in any one of claims 1 to 9,
wherein the aluminum article is a heat exchanger.

11. The method for treating a surface of an aluminum article as recited in any one of claims 1 to 9,
wherein the aluminum article is a pressure vessel liner.

12. A surface-treated aluminum article, comprising:
a surface-treated portion formed on at least a part of a surface of an aluminum article; and
a portion in which at least one compound selected from the group consisting of a silane coupling agent, an isocyanate compound, and a thiol compound is bonded to at least a part of a surface of the surface-treated portion and a functional group is provided.

13. The surface-treated aluminum article as recited in claim 12,
wherein the surface-treated portion is an uneven surface formed on the surface of the aluminum article.

14. The surface-treated aluminum article as recited in claim 12,
wherein the surface-treated portion is one of a boehmite film and a zirconium film.

15. A composite material comprising:
the surface-treated aluminum article as recited in any one of claims 12 to 14; and
an organic material layer laminated on a surface of the surface-treated aluminum article on which the functional group is provided.

16. The composite material as recited in claim 15,
wherein the organic material layer is a resin coating layer.

17. The composite material as recited in claim 15,
wherein the organic material layer is a fiber-reinforced plastic (FRP) layer.
